# EUROPEAN PATENT APPLICATION

(11) **EP 1 248 242 A1**
(43) Date of publication of application: **09.10.2002**
(21) Application number: 01201210.0
(22) Date of filing: 02.04.2001
(51) Int. Cl.: G07F 17/24, G07F 7/08, G07B 15/02, G07C 1/30

(54) **Parking system for delivery vehicles**

(71) Applicant: Parking Partners Ltd., Blanchardstown, Dublin 15 (IE)
(72) Inventor: Den Hollander, Kees, Blanchardstown, Dublin 15 (IE)
(74) Representative: Jorritsma, Ruurd

(57) **Abstract**

A parking computer (2) has a processor (1) connected to memory (5, 7, 9, 11). The parking computer (2) stores a unique vehicle code and parking location information associated with the parking location of the vehicle (29) in its memory. The computer (2) also registers a beginning of a parking period of the vehicle (29). Moreover, the memory (5, 7, 9, 11) has stored information indicating that the parking location is associated with a predetermined, fixed maximum (free) parking time period for the delivery of a freight and the computer (2) checks whether the vehicle (29) is parked within the predetermined, fixed parking time period.

## Description

### Field of the invention

The present invention relates to a computer arrangement provided with a processor connected to memory, the processor being arranged to:
- store in its memory a unique vehicle code of a vehicle parking on a parking location;
- receive parking location information associated with the parking location of the vehicle and store the parking location information in its memory;
- register a beginning of a parking period of the vehicle.

### Prior art

Such computer arrangements for parking systems are known in the art.

Prior art teaches parking fee systems in which information is stored on payments which are made for vehicles at the time parking takes place. At the time parking commences, the vehicle driver contacts the parking fee system by means of a cellular telephone or alternative means of communication to trigger a parking payment to take place. The parking payment is stored in a central location, where for enforcement purposes, it can be accessed remotely in real-time.

In many occasions, delivery vehicles, like courier cars, vans, or lorries, only need some parking area for a short period of time, e.g., 10 minutes or less, to deliver e.g. just one parcel or a few parcels, or only a small number of letters, etc. This time for parking is so short that it is not cost effective to arrange for a parking ticket or other parking permission for the period of parking. Therefore, the drivers of such vehicles often do not arrange for a proper parking permission and risk considerable fines.

On the other hand, special parking locations for such delivery vehicles exist for which no parking fee is required. However, these may be occupied by large lorries for a larger time period, e.g., one hour or more to unload their freight. Then, there might not be any place left for other (smaller) delivery vehicles only needing a short time period to deliver their freight. Again, when the drivers of these vehicles do not arrange for a proper parking permission they risk a (considerable) fine.

### Summary of the invention

The object of this invention is to solve the aforementioned problems and provide an arrangement which helps solving this problem for delivery vehicles.

To that end, the invention provides a computer arrangement as defined at the outset, wherein memory of the computer arrangement has stored information indicating that the parking location is associated with a predetermined, fixed maximum parking time period for the delivery of a freight and the computer arrangement is arranged to check whether the vehicle is parked within the predetermined, fixed parking time period.

Cities, etc. can make special parking bays for such parking locations which are only allowed to be used by delivery vehicles for delivery of goods within the predetermined maximum parking time of, e.g., ten minutes. Thus, parking of delivery vehicles just somewhere in the street hindering other traffic can be largely avoided. Moreover, the companies operating the delivery vehicles can avoid receiving parking fines to a great extent. Finally, the driver of the delivery vehicle has a much greater chance of finding a free parking bay for the delivery of a good or freight. This makes his work more pleasant and effective.

The invention also relates to parking system comprising a computer arrangement as defined above, a plurality of telecommunication units associated with vehicles and transmission means allowing wireless telecommunication between the telecommunication units and the computer arrangement.

The invention also relates to a telecommunication unit associated with a parking system as defined above and arranged to receive information as to beginning of the parking period, to transmit the information to the computer arrangement, as well as a unique code associated with the telecommunication unit and parking location information.

Moreover, the invention relates to a method of operation of a computer arrangement provided with a processor connected to memory, the method comprising the steps of:
- storing in its memory a unique vehicle code of a vehicle parking on a parking location;
- receiving parking location information associated with the parking location of the vehicle and store the parking location information in its memory;
- registering a beginning of a parking period of the vehicle
wherein the memory of the computer arrangement has stored information indicating that the parking location is associated with a predetermined, fixed maximum parking time period for the delivery of a freight and the method comprises the step of checking whether the vehicle is parked within the predetermined, fixed parking time period.

Finally, the invention relates to a method of using a computer arrangement as defined above by means of a telecommunication unit as defined above.

### Brief description of the drawings

The invention will be illustrated with reference to some drawings which are only intended to illustrate the invention and not to limit its scope as defined by the accompanying claims.

Figure 1 shows a general overview of some components that may be used in the present invention.

Figure 2 shows a more detailed overview of a computer arrangement used in a payment centre.

### Description of the preferred embodiment

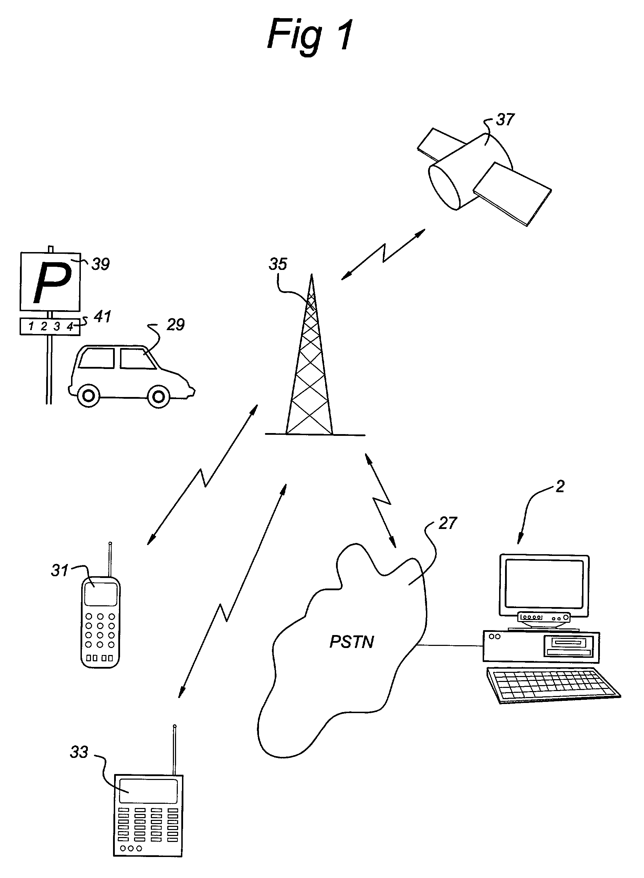

The present invention relates to the field of parking by using some kind of telecommunication device. In figure 1, such a device is shown to be a telecommunication unit 31. The telecommunication unit 31 may be a terminal fixed to a delivery vehicle 29 and is provided with an antenna to communicate with other telecommunications units. The telecommunication unit 31 is provided with keys, or other input means, to let a driver of the vehicle 29 input instructions. Preferably, the telecommunication unit 31 is integrated in or connected to a car radio system, or a car guidance system. The telecommunication unit 31 may, alternatively, be a mobile telephone. The telecommunication unit 31 comprises a processor and memory for storing data and instructions of a computer program controlling the functionality of the telecommunication unit 31. Alternatively, the functionality may be provided by means of a hard wired logic circuit, as is known to persons skilled in the art.

Figure 1 shows a telecommunication mast 35 provided with suitable antenna means to communicate with the telecommunication unit 31 and a control unit 33 to be operated by a parking attendant. Through the mast 35 or via other suitable means the telecommunication unit 31 and the control unit 33 can communicate with a computer arrangement 2 of a parking provider, that is coupled to a telecommunication network like the Public Switched Telecommunication Network (PSTN) 27. The telecommunication unit 31 and the control unit 33 may use a GSM or other similar network known to persons skilled in the art. Some communications may be routed through a satellite 37 if required. Preferably, the telecommunication unit 31 is arranged to determine its own location, e.g., by means of GPS technology supported by GPS satellites, as is known to persons skilled in the art. Alternatively, the exact location of the telecommunication unit 31 can be determined by the mobile telecommunication network (e.g. GSM), e.g., by the known method of triangulation.

The telecommunication unit 31 is further arranged to transmit a unique code identifying the telecommunication unit 31 in a unique way. When the telecommunication unit is a mobile telephone, such a unique code may be the telephone number associated with the telephone. The unique code is related to a vehicle identification code, like the number of the vehicles number plate or a bar code fixed to the vehicle, as will be explained below.

Parking may be done on a location provided with a parking sign 39 with a parking zone number 41 expressly shown to the public. The invention relates to parking locations of which the exact position is known to the computer 2. The parking locations will, in most cases, comprise a plurality of parking bays in the vicinity of shops or office buildings. However, the locations are not restricted to such embodiments. They may also relate to parking bays in residential areas. Preferably, the parking sign 39 comprises an indication of the maximum time period that the delivery vehicle 29 is allowed to park for free to deliver some freight. Such a time period may be, e.g., 10 minutes. However, the invention is not restricted to this example.

The control unit 33 may be arranged such that the parking attendant when checking whether or not the parked delivery vehicle 29 has a parking permit by inputting the number plate value in his control unit 33, for instance, by means of suitable input keys. However, the control unit 33 may, alternatively, be provided with automatic reading means for reading the number plate and then transmitting the number plate value to the computer 2. Instead of using the number plate use may be made of a number or other identification that is linked to the vehicle concerned and that is shown on a separate plate or sheet of paper, or the like, behind one of the car windows and that can be automatically read by the control unit 33. To that end, a bar code or other code can be used. However, such a number may also be in a form legible for the attendant. The computer 2 stores both the unique code identifying the telecommunication unit 31 and the code uniquely identifying the vehicle 29 and the relationship between these two. All this information is stored in memory of the computer 2. All this is prior art and not essential to the present invention.

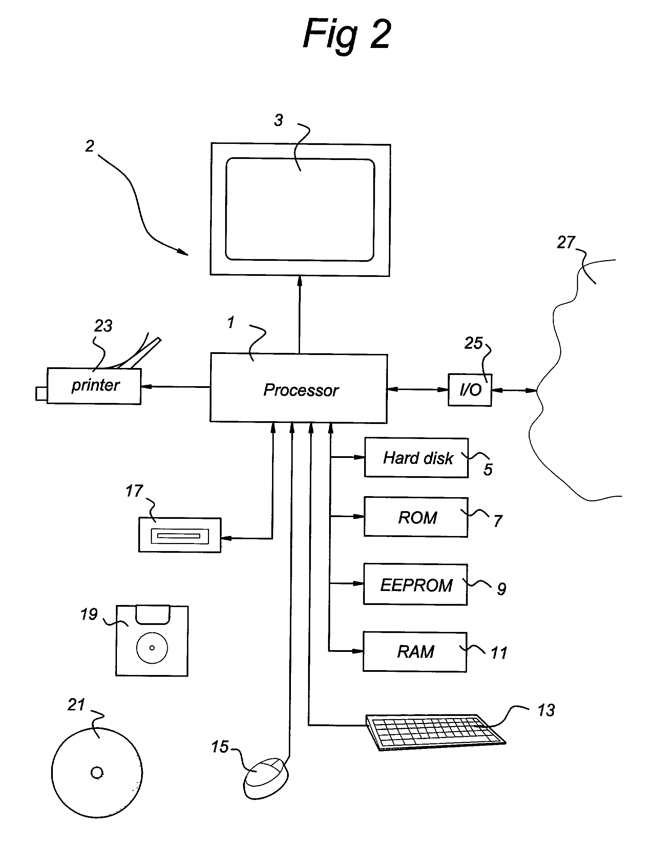

In figure 2, an overview is given of a computer arrangement that can be used to implement the computer 2. The arrangement comprises a processor 1 for carrying out arithmetic operations.

The processor 1 is connected to a plurality of memory components, including a hard disk 5, Read Only Memory (ROM) 7, Electrically Erasable Programmable Read Only Memory (EEPROM) 9, and Random Access Memory (RAM) 11. Not all of these memory types need necessarily be provided. Moreover, these memory components need not be located physically close to the processor 1 but may be located remote from the processor 1.

The processor 1 is also connected to means for inputting instructions, data etc. by a user, like a keyboard 13, and a mouse 15. Other input means, such as a touch screen, a track ball and/or a voice converter, known to persons skilled in the art may be provided too.

A reading unit 17 connected to the processor 1 is provided. The reading unit 17 is arranged to read data from and possibly write data on a data carrier like a floppy disk 19 or a CDROM 21. Other data carriers may be tapes, DVD, etc,. as is known to persons skilled in the art.

The processor 1 is also connected to a printer 23 for printing output data on paper, as well as to a display 3, for instance, a monitor or LCD (Liquid Crystal Display) screen, or any other type of display known to persons skilled in the art.

The processor 1 may be connected to a communication network 27, for instance, the Public Switched Telephone Network (PSTN), a Local Area Network (LAN), a Wide Area Network (WAN), etc. by means of I/O means 25. Connection to network 27 may be physical or wireless. The processor 1 may be arranged to communicate with other communication arrangements through the network 27.

The processor 1 may be implemented as stand alone system, or as a plurality of parallel operating processors each arranged to carry out subtasks of a larger computer program, or as one or more main processors with several subprocessors. Parts of the functionality of the invention may even be carried out by remote processors communicating with processor 1 through the network 27.

Now, a brief description of the functionality of the system shown in figures 1 and 2 is given.

A driver desiring to park his delivery vehicle 29 just for a short period of time to deliver a good or freight looks for a location where delivery vehicles are allowed to park for free during a predetermined time, e.g., 10 minutes. When he has found such a location he parks his delivery vehicle 29 there and either manually or automatically a wireless connection is made between the telecommunication unit 31 and the computer 2. This connection may be set up in any known way. Preferably, the telecommunication unit 31 has the telephone number of the computer 2 pre-stored in his memory (not shown). The telecommunication unit 31 may be a telecommunication unit designed with a special button. When the driver presses the button the telecommunication unit 31 will automatically call the computer 2 to indicate that a period of parking has started. To that end, it sends its unique identification code to the computer 2. In one embodiment, the driver then inputs the parking zone number 41 by means of the keys of the telecommunication unit 31. However, preferably, the telecommunication unit is provided with a GPS functionality and automatically transmits its exact location to the computer 2. The computer 2 can then check whether the delivery vehicle 29 is parked on a location where it can remain parking for free during that predetermined short time period. The computer 2 stores the received unique identification code together with the time of beginning of the parking and searches for the vehicle identification code in his memory, related to that unique identification code.

Alternatively, the telecommunication unit 31 is preprogrammed to transmit the vehicle identification code to the computer 2 at the beginning of the parking period. Then, the computer does not need to know any unique identification code of the telecommunication unit 31 to register the beginning of a parking of the delivery vehicle 29.

In an alternative embodiment, the telecommunication unit 31 automatically calls the computer 2 to inform the computer 2 of the start of parking and its location, using e.g. its GPS functionality, when the delivery vehicle's engine is switched off. To that end, then, telecommunication unit 31 has an input for receiving information that the vehicle's engine is switched off to indicate to the telecommunication unit 31 the beginning of the parking period. That input may be connected to a board computer of vehicle 29 determining whether said engine is switched off. The computer 2 then automatically checks whether or not the delivery vehicle 29 is parked on a free parking location. In a further embodiment, it could be detected that a smart card born by the vehicle's driver is not communicating anymore with the telecommunication unit 31 anymore, which marks the start of a parking period. Such a smart card can be received by a slit in the telecommunication unit 31 and thus communicate with an internal processor of the telecommunication unit 31. Removal of the smart card marks the beginning of the parking period. Alternatively, the driver has a unique magnetic card or transponder on his person or a handheld device, which is typically in the vehicle when the driver is in the vehicle. Removal of a holder may indicate to the telecommunication unit 31 the beginning of the parking period.

The message transmitted by the telecommunication unit 31 may use functionality nowadays known as SMS.

When the parking attendant comes to check whether the delivery vehicle 29 has a valid permission to be parked on the parking location he may read the vehicle's number plate (or other code related to the delivery vehicle 29) and key this, possibly with a parking zone number 41, into his control unit 33. As clarified above, he may also use an automatic way of reading the vehicle's identification code from the delivery vehicle 29 if his control unit 33 provides such functionality. The control unit 33 then transmits this information together with the zone number 41, if any, to the computer 2 that automatically checks whether the delivery vehicle 41 is allowed to be parked on this parking location.

In case, the telecommunication unit 31 is provided with a GPS functionality the parking attendant does not need to input a parking zone number since the computer 2 already knows where the delivery vehicle 29 is parked. Then, the parking attendant only needs to input the vehicle's identification code which is then transmitted to the computer 2.

The computer 2 replies by transmitting a message to the control unit 33 that displays this message to the parking attendant through the display of the control unit 33. The message may be either positive or negative. The message will be positive if the starting time of parking is registered correctly by the computer 2 and the time passed since the starting time of parking is still within the parking period allowed for free parking. The message will be negative if the free parking period has passed or when the starting time of parking is not registered correctly. This may be caused by the driver forgetting to transmit the start of parking to the computer 2 or a technical failure.

If the delivery vehicle 29 is not allowed to be parked there at the time of checking by the parking attendant, the parking attendant may issue a parking fine. Alternatively, the computer 2 then calculates a parking fine due and automatically charges the fine to a banking account of the owner of the delivery vehicle 29. Procedures for such automatic debiting are known to persons skilled in the art.

The attendant may be warn of the valid or invalid vehicle's permission to park by means of indication means on the control unit 33, for instance, a red lamp showing that permission is invalid and a green lamp showing a valid permission.

Optionally, in order to protect the system either one or both the driver and the parking attendant may need a personal identification number to get access to the computer 2.

The telecommunication explained above may, if and where required, use the Internet, SMS messages, and other way of modern telecommunication like the Wireless Application Protocol (WAP) or other protocol with similar functionality.

In the embodiments described above, it is assumed that the predetermined parking period of e.g. is free, i.e., any delivery vehicle 29 may be parked for free during e.g. 10 minutes. However, in an alternative embodiment, the predetermined time period may relate to a small parking charge automatically debited to the owner's banking account. In a further embodiment, owners of delivery vehicles need to arrange for a subscription allowing them to use the specifically indicated parking bays for delivery vehicles during said predetermined parking time period anywhere in a predetermined area, for instance, a city, a state or a country. Such a subscription is valid for a predetermined time period, e.g., a year.

## Claims

1. A computer arrangement (2) provided with a processor (1) connected to memory (5, 7, 9, 11), the processor (1) being arranged to:
• store in its memory a unique vehicle code of a vehicle (29) parking on a parking location;
• receive parking location information associated with said parking location of said vehicle (29) and store said parking location information in its memory;
• register a beginning of a parking period of said vehicle (29)
wherein said memory (5, 7, 9, 11) of said computer arrangement (2) has stored information indicating that the parking location is associated with a predetermined, fixed maximum parking time period for the delivery of a freight and the computer arrangement (2) is arranged to check whether said vehicle (29) is parked within said predetermined, fixed parking time period.

2. Computer arrangement according to claim 1, wherein said predetermined, fixed parking time period is ten minutes.

3. Computer arrangement according to claim 1 or 2, wherein said memory stores information indicating that parking during said predetermined, fixed parking time period is free.

4. Computer arrangement according to claim 1, 2 or 3, wherein said memory stores information indicating that parking during said predetermined, fixed parking time period is related to a subscription and information as to which vehicles (29) are associated with such a subscription.

5. A parking system comprising a computer arrangement according to any of the preceding claims, a plurality of telecommunication units (31) associated with vehicles (29) and transmission means allowing wireless telecommunication between said telecommunication units (31) and said computer arrangement (2).

6. Parking system according to claim 5, wherein said telecommunication units (31) are provided with means to determine said parking location information by means of GPS functionality.

7. Parking system according to claim 5 or 6, wherein said system is provided with means to provide said parking location information by means of GSM location functionality.

8. Parking system according to claim 7, wherein said GSM location functionality uses a method of triangulation.

9. A telecommunication unit (31) associated with a parking system according to any of the claims 5 through 8, arranged to receive information as to beginning of said parking period, to transmit said information to said computer arrangement (2), as well as a unique code associated with at least one of said delivery vehicle (29) and said telecommunication unit (31), and parking location information.

10. Telecommunication unit (31) according to claim 9, wherein said telecommunication unit (31) comprises a button to be operated by a vehicle's driver, operation of said button indicating to said telecommunication unit (31) said beginning of said parking period.

11. Telecommunication unit (31) according to claim 9, wherein said telecommunication unit (31) has an input for receiving information that a vehicle's engine is switched off indicating to said telecommunication unit (31) said beginning of said parking period.

12. Telecommunication unit (31) according to claim 9, wherein said telecommunication unit is arranged to communicate with a smart card or the like, removing said smart card or the like from communicating wit said telecommunication unit (31) indicating to said telecommunication unit (31) said beginning of said parking period.

13. A method of operation of a computer arrangement (2) provided with a processor (1) connected to memory (5, 7, 9, 11), the method comprising the steps of:
• storing in its memory a unique vehicle code of a vehicle (29) parking on a parking location;
• receive parking location information associated with said parking location of said vehicle (29) and store said parking location information in its memory;
• registering a beginning of a parking period of said vehicle (29)
wherein said memory (5, 7, 9, 11) of said computer arrangement (2) has stored information indicating that the parking location is associated with a predetermined, fixed maximum parking time period for the delivery of a freight and the method comprises the step of checking whether said vehicle (29) is parked within said predetermined, fixed parking time period.

14. A method of using a computer arrangement (2) according to any of the claims 1 through 4 by means of a telecommunication unit according to any of the claims 9 through 12.
